# EUROPÄISCHE PATENTSCHRIFT

(11) **EP 3 663 881 B1**
(45) Veröffentlichungstag und Bekanntmachung des Hinweises auf die Patenterteilung: **24.02.2021**
(21) Anmeldenummer: 18209915.0
(22) Anmeldetag: 03.12.2018
(51) Int. Cl.: G05D 1/02, G01S 17/00, G01S 7/48, G01S 17/931, G01S 17/89, G01S 17/50

(54) **VERFAHREN ZUR STEUERUNG EINES AUTONOMEN FAHRZEUGS AUF DER GRUNDLAGE VON GESCHÄTZTEN BEWEGUNGSVEKTOREN**
METHOD FOR CONTROLLING AN AUTONOMOUS VEHICLE ON THE BASIS OF ESTIMATED MOVEMENT VECTORS
PROCÉDÉ DE COMMANDE D'UN VÉHICULE AUTONOME EN FONCTION DES VECTEURS DE MOUVEMENT ESTIMÉS

(43) Veröffentlichungstag der Anmeldung: 10.06.2020
(73) Patentinhaber: SICK AG, 79183 Waldkirch (DE)
(72) Erfinder: Müncher, Martin, 79261 Gutach im Breisgau (DE); Dulat, Simon, 79211 Denzlingen (DE); Zimmermann, Ralf, 79331 Teningen (DE); Mabon, Remi, 79183 Waldkirch (DE); Daubmann, Michael, 79674 Todtnau (DE); Ruh, Dominic, 79102 Freiburg (DE)
(74) Vertreter: Manitz Finsterwald Patent- und Rechtsanwaltspartnerschaft mbB

(56) Entgegenhaltungen:
- US-A- 6 118 475
- US-A1- 2013 197 736
- US-A1- 2016 358 018
- US-B1- 8 989 944

## Beschreibung

Die vorliegende Erfindung betrifft ein Verfahren zur Steuerung eines autonomen Fahrzeugs, welches einen, bevorzugt optischen, Sensor zur Erfassung von Objekten in einem Erfassungsbereich des optischen Sensors aufweist. Allgemein kann das Verfahren dazu angepasst sein, das Fahrzeug in Abhängigkeit von Signalen des optischen Sensors zu steuern. Hierbei kann das Fahrzeug gesteuert werden, um Kollisionen zu vermeiden. Dies kann insbesondere durch eine dynamische Anpassung der Fahrzeugsteuerung erfolgen.

Trotz der Tatsache, dass der Erfassungsbereich automatisch abgetastet und im Erfassungsbereich vorhandene Objekte dementsprechend automatisch erfasst werden können, besteht bei bekannten Verfahren zur Steuerung von autonomen Fahrzeugen das Problem, dass eine zuverlässige Vermeidung von Kollisionen zwischen dem Fahrzeug und dem Objekt eine sehr restriktive bzw. unflexible Steuerung des Fahrzeugs voraussetzt. Beispielsweise können automatisch Schutzfeldverletzungen festgestellt werden, wobei ein in den Erfassungsbereich und/oder in das Schutzfeld eindringendes Objekt regelmäßig zu einem Nothalt des Fahrzeugs führt. Ein Nothalt des Fahrzeugs könnte jedoch prinzipiell in vielen Fällen vermieden werden, etwa weil ein betreffendes Objekt sich nur kurzzeitig im Erfassungsbereich befindet oder weil wegen des aktuellen Fahrzeugkurses tatsächlich keine Kollision droht.

Es ist eine Aufgabe der Erfindung, ein verbessertes Verfahren zur Steuerung eines autonomen Fahrzeugs zu schaffen.

US 2016/0358018 A1 offenbart ein System zur Objektdetektion, welches dazu dient, Kollisionen zu vermeiden. Hierzu wird die jeweilige Richtung von bewegten Objekten geschätzt.

US 8 989 944 B1 offenbart ein Verfahren zur Steuerung eines autonomen Fahrzeugs in Abhängigkeit von der Geschwindigkeit eines detektierten Objekts.

Die Aufgabe wird gelöst durch ein Verfahren mit den Merkmalen des Anspruchs 1.

Ein Verfahren zur Steuerung eines autonomen Fahrzeugs umfasst folgende Schritte: Ermitteln von Messwerten des Erfassungsbereichs, wobei die Messwerte zumindest Distanzwerte umfassen; Ermitteln von Modellobjekten auf der Grundlage der Messwerte, um Objekte in dem Erfassungsbereich zu erfassen, wobei ein jeweiliges Objekt durch ein jeweiliges Modellobjekt repräsentiert wird; Schätzen eines Bewegungsvektors auf der Grundlage des jeweiligen Modellobjekts, wobei der Bewegungsvektor eine Bewegung des jeweiligen Objekts repräsentiert; und Steuern des autonomen Fahrzeugs auf der Grundlage des Bewegungsvektors.

Ein Aspekt des Verfahrens liegt darin, dass zur Erfassung von Objekten Modellobjekte ermittelt werden. Ein Modellobjekt ist allgemein ein geometrisch definiertes Objekt, welches ein reales Objekt, insbesondere dessen äußere Kontur, repräsentiert. Das Modellobjekt ist vorzugsweise durch wenige, z.B. 1 bis 10, vorzugsweise 2 bis 8 Parameter definiert (andere Parameteranzahlen sind möglich) und stellt insofern ein stark vereinfachtes Modell des realen Objekts dar. Beispielsweise kann ein Objekt, dessen Form beliebig komplex sein kann, durch ein geometrisches Standardelement oder einen geometrischen Standardkörper, wie etwa ein Quadrat, einen Zylinder oder einen Quader, dargestellt werden. Auf diese Weise kann das reale Objekt geometrisch abstrahiert werden, um dessen Komplexität und insbesondere die zur Erfassung des Objekts erforderliche Datenmenge zu reduzieren. Die Ermittlung eines Modellobjekts kann insbesondere durch eine sogenannte BLOB-(binarized large object)-Analyse erfolgen. BLOBs bzw. binäre Datenobjekte sind aus der Bildverarbeitung allgemein bekannt und sind durch zusammenhängende Flächenabschnitte in zweidimensionalen Bildern charakterisiert. Im Rahmen einer BLOB-Analyse können die Messwerte, die vorzugsweise ein Bild des Erfassungsbereichs ergeben, durch ein Segmentierungsverfahren verarbeitet werden, um einen oder mehrere BLOBs in dem Bild zu ermitteln. Derartige BLOBs können Modellobjekte sein.

Vorzugsweise wird die Ermittlung von Modellobjekten stets auf die Distanzwerte gestützt, um die Zuverlässigkeit des Verfahrens zu erhöhen. Aus demselben Grund können als Messwerte zusätzlich Intensitäts- bzw. Helligkeitswerte des Erfassungsbereichs herangezogen werden, um die Modellobjekte mit noch größerer Zuverlässigkeit bzw. Präzision zu ermitteln. Die Modellobjekte können insbesondere hochspezifisch aus den Daten einer 3D-Kamera, insbesondere einer Licht-Laufzeitkamera, extrahiert werden, um die Modellobjekte gegenüber den realen Objekten auf ihren sicherheitsrelevanten Gehalt zu reduzieren.

Ein weiterer Aspekt des Verfahrens besteht in der Steuerung des Fahrzeugs auf der Grundlage eines oder mehrerer Bewegungsvektoren. Ein Bewegungsvektor repräsentiert allgemein eine aktuelle Bewegung eines Objekts im Erfassungsbereich. Im Gegensatz zu herkömmlichen Verfahren, bei denen der Steuerung des Fahrzeugs im Wesentlichen Rohsensordaten zugrunde gelegt werden wird nun explizit eine Bewegungscharakteristik eines jeweiligen Objekts und/oder Modellobjekts ermittelt.

Herkömmliche Rohsensordaten werden oftmals mit einem einfachen Schwellwertverfahren mit einem komplexen Erkennungsverfahren gefiltert, um ein Objekt zu detektieren. Solche gefilterten Sensordaten stellen jedoch keinen Bewegungsvektor dar, weil sie lediglich das Vorhandensein eines Objekts im Erfassungsbereich repräsentieren, nicht jedoch dessen aktuelle Bewegung.

Die Steuerung des Fahrzeugs wird vorzugsweise ausschließlich auf der Grundlage von einem oder mehreren Bewegungsvektoren ausgeführt. Hierdurch werden intelligente Steuerungsmaneuver ermöglicht, insbesondere in Form von Ausweichmanövern und/oder einer Geschwindigkeitsanpassung des Fahrzeugs.

Es hat sich als vorteilhaft erwiesen, einen jeweiligen Bewegungsvektor auf der Basis eines jeweiligen Modellobjekts zu schätzen. Mit anderen Worten werden die Signale des optischen Sensors vorzugsweise nicht unmittelbar zur Schätzung der Bewegungsvektoren herangezogen. Vielmehr werden vorzugsweise zunächst Modellobjekte aus den Signalen ermittelt, um die für die Erfassung der Objekte relevanten Informationen aus den Signalen zu extrahieren. Ein jeweiliger Bewegungsvektor kann sodann zum Beispiel auf der Grundlage eines jeweiligen Modellobjekts und unter Berücksichtigung eines Bewegungsmodells geschätzt werden. Es ist auch möglich, eine Historie von Modellobjekten, d.h. zeitlich vorangegangene Modellobjekte zu betrachten, um einen jeweiligen Bewegungsvektor zu ermitteln. Dies wird nachfolgend anhand von Ausführungsbeispielen noch genauer erläutert.

Allgemein ermöglicht die Erfindung wegen der Berücksichtigung des Bewegungsvektors für ein jeweiliges Objekt eine Fahrzeugsteuerung im Sinne eines "vorausschauenden" Fahrens. Hierbei kann das autonome Fahrzeug in Abhängigkeit von einem oder mehreren Bewegungsvektoren derart gesteuert werden, dass eine potentielle Kollision durch Anpassen der Fahrzeugbewegung vermieden wird, insbesondere wobei das Anpassen der Fahrzeugbewegung eine Richtungsänderung und/oder eine Geschwindigkeitsänderung des autonomen Fahrzeugs umfasst. Auf vollständige Stopmanöver (Nothalt) kann somit überwiegend verzichtet werden. Solche Stopmanöver werden vorzugsweise nur noch dann eingeleitet, wenn sie im Sinne einer ultima ratio unvermeidbar sind, d.h. wenn eine Anpassung der Fahrzeugbewegung nicht mehr möglich ist, um eine Kollision sicher zu vermeiden. Auf diese Weise wird ein intelligentes Steuerungsverfahren für autonome Fahrzeuge erzielt.

Ausführungsformen bzw. beispielhafte Varianten des Verfahrens werden im Folgenden beschrieben und ergeben sich allgemein aus der Beschreibung, den Ansprüchen und den Figuren.

Nach einer Ausführungsform umfasst der Bewegungsvektor eine Information über eine Bewegungsgeschwindigkeit des jeweiligen Objekts und/oder eine Bewegungsrichtung des jeweiligen Objekts und/oder einen Abstand, insbesondere eine Abstandsänderung, zwischen dem jeweiligen Objekt und dem optischen Sensor. Der Bewegungsvektor kann allgemein so definiert sein, dass die Bewegung des Objekts bezüglich einer oder mehrerer bestimmter Raumdimensionen angegeben wird. Beispielsweise kann die Bewegungsgeschwindigkeit des jeweiligen Objekts bezüglich der Dimensionen eines Fahrzeugkoordinatensystems angeben sein. Alternativ oder zusätzlich kann der Bewegungsvektor allgemein durch eine Vielzahl von Parametern definiert sein, welche die Bewegung des betreffenden Objekts charakterisieren oder in Kombination mit anderen Parametern hierfür geeignet sind. So kann der Bewegungsvektor beispielsweise den aktuellen Abstand zwischen dem jeweiligen Objekt und dem optischen Sensor angeben. In Kombination mit einem weiteren Bewegungsvektor, welcher den Abstand zwischen dem jeweiligen Objekt und dem optischen Sensor zu einem vorangegangenen Zeitpunkt angibt, kann aus der Differenz der beiden Abstände die Abstandsänderung angeben werden, welche die Bewegung des Objekts repräsentiert. Unter Berücksichtigung der Zeitdifferenz kann der Wert der durchschnittlichen Bewegungsgeschwindigkeit ermittelt werden. Ferner ist es auch möglich, dass der Bewegungsvektor eine Information über eine Beschleunigung des Objekts umfasst. Darüber hinaus kann der Bewegungsvektor eine Positionsinformation umfassen, welche die Position des Objekts relativ zum Fahrzeug repräsentiert.

Vorzugsweise umfasst der Bewegungsvektor zumindest die aktuelle Position und die aktuelle Geschwindigkeit des betreffenden Objekts. Der Bewegungsvektor kann auch ausschließlich aus diesen oder den oben genannten Größen bestehen.

Der Bewegungsvektor kann allgemein relativ zu dem autonomen Fahrzeug definiert sein. Beispielsweise können einzelne Parameter bzw. Informationen des Bewegungssektors eine relative Bewegung eines Objekts repräsentieren. Alternativ oder zusätzlich kann ein jeweiliger Bewegungsvektor oder Teile hiervon auf ein festes Koordinatensystem oder dergleichen bezogen sein, sodass der Bewegungsvektor insoweit unabhängig von der Bewegung des Fahrzeugs definiert sein kann. Hierbei ist es bevorzugt, dass auch die Position des optischen Sensors relativ zu dem festen Koordinatensystem ermittelbar ist. Beispielsweise kann sich das Fahrzeug selbst in dem festen Koordinatensystem lokalisieren, insbesondere mittels "indoor GPS" oder dergleichen.

Nach einer weiteren Ausführungsform wird der Bewegungsvektor unter Verwendung eines Tracking-Algorithmus, bevorzugt eines Kalman-Filters geschätzt. Ein Tracking-Algorithmus ist allgemein dazu ausgebildet, ein oder mehrere bewegte Objekte (elektronisch) zu verfolgen. Hierbei werden Informationen über den Verlauf einer Bewegung und die Lage eines Objekts durch robuste Datenverarbeitung aus einem Strom von Sensordaten des optischen Sensors extrahiert, wobei als Besonderheit wie erwähnt jeweilige Modellobjekte der Schätzung eines Bewegungsvektors zugrunde gelegt werden. Die Verwendung eines Tracking Algorithmus beinhaltet also eine robuste Datenverarbeitung, sodass etwaige Fehler bzw. ungewollte Abweichungen in den Sensordaten reduziert werden. Vorzugsweise ist der Tracking-Algorithmus ferner dazu ausgebildet, den Bewegungsvektor in Echtzeit, d.h. zumindest im Wesentlichen gleichzeitig mit der Objektbewegung zu schätzen.

Im Rahmen des hier beschriebenen Verfahrens hat sich das Kalman-Filter als besonders vorteilhaft erwiesen. Das Kalman-Filter eignet sich insbesondere gut zur echtzeitfähigen und robusten Schätzung von Bewegungsvektoren, was bei der Steuerung von autonomen Fahrzeugen von besonderem Vorteil ist.

Für jedes Objekt und/oder Modellobjekt und/oder für jedes BLOB kann ein separates Kalman-Filter instanziiert werden. Dies bedeutet, für jedes Objekt und/oder Modellobjekt und/oder BLOB wird mittels eines eigenen Kalman-Filters ein eigener Bewegungsvektor geschätzt, um das jeweilige Objekt und/oder Modellobjekt und/oder BLOB im zeitlichen Verlauf zu verfolgen. Vorzugsweise werden vorbestimmte Parameter eines BLOBs in einem Kalman-Filter verwendet, um einen Bewegungsvektor zu schätzen.

Das oder die mehreren objektbezogenen Kalman-Filter können, wie nachstehend auch angedeutet, für jedes neue Einzelbild neu ausgeführt werden, um den bzw. die jeweiligen Bewegungsvektoren zu aktualisieren.

Es ist auch möglich, dass mehrere Objekte und/oder Modellobjekte und/oder BLOBs, insbesondere mittels der jeweiligen Kalman-Filter, als zueinander gehörend erkannt werden (z.B. die beiden Beine derselben Person) und dann anschließend mittels eines neu instanziierten einzelnen Kalman-Filters weiterverarbeitet werden.

Von Vorteil bei der Ausführung des Kalman-Filters basierend auf BLOBs und/oder Objekten bzw. Modellobjekten, welche auf wenigen spezifischen Parametern basieren, ist es, dass die Verfolgung eines jeweiligen Objekts mittels des Kalman-Filters mit hoher Zuverlässigkeit erfolgen kann ("stabile Assoziation"). Insbesondere wenn das Modellobjekt geometrisch standardisiert definiert ist (z.B. als BLOB mit wenigen Größenparametern), werden hierdurch weniger relevante Objekteigenschaften für die Auswertung herausgefiltert. Dies führt bei geeigneter Auswahl der spezifischen Parameter auch zu einer größeren Effizienz.

Vorzugsweise ist der Tracking-Algorithmus dazu angepasst, den Bewegungsvektor auf der Grundlage von ein oder mehreren Parametern des jeweiligen Modellobjekts zu berechnen, wobei der Bewegungsvektor eine Bewegung des jeweiligen Objekts bevorzugt ausschließlich in Bezug auf eine definierte Position des jeweiligen Modellobjekts repräsentiert. Beispielsweise kann der Bewegungsvektor auf lediglich einen Punkt bezogen sein, welcher die definierte Position des jeweiligen Modellobjekts bildet. Der genau eine Punkt kann durch das BLOB definiert sein und beispielsweise eine maximale Relevanz oder den kürzesten Abstand zwischen dem Objekt und dem Fahrzeug repräsentieren. Durch die Verwendung genau eines Punkts wird eine Datenreduktion der zu verarbeitenden Daten erreicht, wodurch eine wenig rechenintensive und schnelle Methode zur Kollisionsvermeidung bereitgestellt wird. Zusätzlich kann insbesondere die gleichzeitige Auswertung mehrerer zeitlich hintereinander geschätzter Bewegungsvektoren verbessert und beschleunigt werden.

Nach einer weiteren Ausführungsform werden die Messwerte als eine Folge von mehreren Einzelbildern des Erfassungsbereichs ermittelt, wobei das Ermitteln von Modellobjekten jeweils auf der Grundlage eines Einzelbilds der Folge von mehreren Einzelbildern durchgeführt wird, um eine Folge von mehreren Modellobjekten zu erhalten. Mit anderen Worten wird der Ermittlung der Modellobjekte eine Sequenz von Einzelbildern zugrunde gelegt, die jeweils den optischen abgetasteten Ist-Zustand des Erfassungsbereichs zu einem bestimmten Zeitpunkt repräsentieren. Die Folge von mehreren Einzelbildern kann somit als ein Video des Erfassungsbereichs aufgefasst werden. Die Einzelbilder bzw. die jeweils betreffenden Messwerte werden vorzugsweise in vorbestimmten, insbesondere regelmäßigen, Zeitabständen ermittelt. Es ist möglich, bei der Ermittlung eines jeweiligen Modellobjekts lediglich eines der mehreren Einzelbilder zu berücksichtigen, um die Ermittlung besonders schnell und einfach ausführen zu können. Zur Erhöhung der Präzision kann allerdings auch vorgesehen sein, zur Ermittlung eines jeweiligen Modellobjekts mehrere Einzelbilder heranzuziehen. Hierbei kann der jeweilige Bewegungsvektor auf der Grundlage einer Folge von Modellobjekten geschätzt werden, welche insbesondere die Folge von Modellobjekten sein kann, welche auf der Grundlage der Folge von Einzelbildern ermittelt worden ist. Die Validität des Bewegungssektors kann auf diese Weise signifikant erhöht werden. Dies gelingt umso besser, je mehr etwaige zeitliche Korrelationen zwischen den Einzelbildern einerseits und den Bewegungsvektoren andererseits ausgenutzt wird. Somit kann der Bewegungsvektor allgemein unter Berücksichtigung der zeitlichen Korrelation zwischen den Modellobjekten und/oder den Einzelbilder ermittelt werden.

Vorzugsweise wird eine Folge von Bewegungsvektoren, insbesondere die vorstehend genannte Folge von Bewegungsvektoren ausgewertet, um eine Bewegungsbahn des jeweiligen Objekts zu schätzen, wobei das autonome Fahrzeug in Abhängigkeit von der Bewegungsbahn gesteuert wird. Die intelligente Steuerung des autonomen Fahrzeugs kann durch die Berücksichtigung eines explizit ermittelten Bewegungsverlaufs, d.h. einer Bewegungsbahn noch weiter verbessert werden. Der Steuerung werden hierbei also nicht lediglich ein oder mehrere Bewegungsvektoren sondern eine Bewegungsbahn zugrunde gelegt. Mit anderen Worten sind die Bezugsdaten für die Steuerung nicht auf einzelne Zeitpunkte (mit einem jeweiligen Bewegungsvektor) beschränkt, sondern eröffnen die Möglichkeit, einen Kurs eines jeweiligen Objekts nachzuvollziehen und den Kurs des zu steuernden Fahrzeugs optimal an den Kurs des Objekts anzupassen, um eine Kollision zu vermeiden.

Die Bewegungsbahn kann zumindest einen Abschnitt umfassen, der eine erwartete zukünftige Bewegungsbahn des jeweiligen Objekts repräsentiert. Auf diese Weise kann die Steuerung des Fahrzeugs besonders "vorausschauend" erfolgen, da eine potentielle Kollision bereits zu einem sehr frühen Zeitpunkt erkannt und dementsprechend frühzeitig eine Kursänderung oder Geschwindigkeitsanpassung eingeleitet werden kann. Die entsprechende Kursänderung oder Geschwindigkeitsanpassung kann aus diesem Grund auch besonders sanft erfolgen, d. h. kurzfristige oder hektische Änderungsmanöver des Fahrzeugs werden vermieden. Allgemein kann ein aktueller Kurs des Fahrzeugs mit der geschätzten Bewegungsbahn des Objekts verglichen werden, wobei der Kurs des Fahrzeugs im Falle einer zu erwartenden Überschneidung des Kurses mit der Bewegungsbahn derart abgeändert wird, dass sich der Kurs und die Bewegungsbahn nicht kreuzen werden und somit keine Kollision zu erwarten ist.

Vorzugsweise wird das autonome Fahrzeug in Abhängigkeit von der Bewegungsbahn derart gesteuert, dass eine potentielle Kollision durch Anpassen der Fahrzeugbewegung vermieden wird. Das Anpassen der Fahrzeugbewegung kann insbesondere eine Richtungsänderung und/oder eine Geschwindigkeitsänderung des autonomen Fahrzeugs umfassen. Hierbei wird ein Nothalt des Fahrzeugs vermieden zugunsten einer automatisch angepassten Steuerung des Fahrzeugs. Beispielsweise kann das Fahrzeug ohne eine Kursänderung vorübergehend die Geschwindigkeit verringern, um das Objekt passieren zu lassen.

Es sind auch Anwendungsfälle denkbar, in denen das autonome Fahrzeug einem Objekt, bei welchem es sich auch um ein anderes Fahrzeug handeln kann, nachgeführt wird ("follow me"). Zur Umsetzung dieser Funktionalität kann das autonome Fahrzeug in Abhängigkeit von der Bewegungsbahn gesteuert werden, um das autonome Fahrzeug dem Objekt nachzuführen. Ein Nachführen bzw. Verfolgen eines betreffenden Objekts kann auf diese Weise besonders präzise ausgeführt werden. Eine Nachführung kann z.B. für eine Steuerung einer Gruppe von autonomen Fahrzeugen vorgesehen werden, wobei ein erstes Fahrzeug der Gruppe einem vordefinierten Kurs folgt und ein anderes Fahrzeug diesem Kurs bzw. dem ersten Fahrzeug folgen soll. Das andere Fahrzeug kann somit einfacher aufgebaut sein und es muss beispielsweise keine direkte Verbindung zu dem ersten Fahrzeug bereitgehalten werden.

Gemäß einer weiteren Ausführungsform weist der optische Sensor wenigstens eine 3D-Kamera, bevorzugt eine TOF-(time of flight)-Kamera, mit bevorzugt einer Beleuchtungseinheit und einem Bildsensor auf. Die Messwerte werden vorzugsweise separat für einzelne Bildpunkte des Bildsensors ermittelt und umfassen zusätzlich zu den Distanzwerten Intensitätswerte des Erfassungsbereichs, die vorzugsweise allesamt unter Verwendung des optischen Sensors ermittelt werden. Die Messwerte bilden somit eine umfassende Datengrundlage für die Ermittlung der jeweiligen Modellobjekte, sodass die Validität und Aussagekraft der Modellobjekte erhöht wird.

In einer Ausführungsform des Verfahrens mit dem oben genannten optischen Sensor sind folgende Schritte vorgesehen: Bestimmen von Objekterfassungsdaten umfassend zumindest Messwerte des Erfassungsbereichs, die ermittelt werden, wenn sich Objekte in dem Erfassungsbereich befinden und der Erfassungsbereich bevorzugt von einer von der Beleuchtungseinheit ausgesandten Strahlung beaufschlagt ist; Bestimmen von Referenzerfassungsdaten umfassend zumindest Messwerte des Erfassungsbereichs, die ermittelt werden, wenn sich kein Objekt in dem Erfassungsbereich befindet und/oder der Erfassungsbereich bevorzugt nicht von einer von der Beleuchtungseinheit ausgesandten Strahlung beaufschlagt ist; Ermitteln von Modellobjekten auf der Grundlage der Objekterfassungsdaten und der Referenzerfassungsdaten.

Ein Aspekt dieser Ausführungsform besteht darin, dass neben Objekterfassungsdaten, welche die Information über eventuell im Erfassungsbereich befindliche Objekte enthalten, Referenzerfassungsdaten herangezogen werden. Die Referenzerfassungsdaten können in vorbestimmten, z.B. regelmäßigen oder unregelmäßigen, zeitlichen Abständen ermittelt werden und dienen im Wesentlichen dazu, eine hohe Erfassungszuverlässigkeit zu gewährleisten. Daneben erlaubt der Einsatz von Referenzerfassungsdaten auch eine spezifischere und somit mitunter schnellere Auswertung der Objekterfassungsdaten.

Bestimmte Messwerte der Referenzerfassungsdaten, insbesondere Referenzintensitätswerte werden, vorzugsweise bei ausgeschalteter Beleuchtungseinheit ermittelt, d.h. diese Messwerte der Referenzerfassungsdaten repräsentieren eine "Hintergrundbeleuchtung", die häufig variabel ist, z.B. bedingt durch unterschiedlich starkes Tageslicht. Ein variables Umgebungslicht wird somit durch die Referenzerfassungsdaten bzw. einem Teil hiervon quantifiziert und kann dementsprechend bei der Auswertung der Objekterfassungsdaten vorteilhaft berücksichtigt werden, z.B. indem Messwerte in Relation zueinander gesetzt werden, um eine Normalisierung bzw. Kompensation zumindest der interessierenden Messwerte zu erreichen.

Hintergrund- bzw. Umgebungslicht kann bezüglich der Messwerte auch als (Hintergrund-) Rauschen aufgefasst werden, welches die Messwerte der Objekterfassungsdaten gegenüber einer definierten Beleuchtungs-Charakteristik der Beleuchtungseinheit mehr oder weniger verfälscht. Insofern können Messwerte zwischen den Objekterfassungsdaten und den Referenzerfassungsdaten im Sinne eines Signal-zu-Rausch-(SNR)-Verhältnisses zueinander in Beziehung gesetzt werden. Ein SNR-Verhältnis kann insbesondere für einzelne Messwerte bzw. Bildpunkte ermittelt und sodann in die Auswertung der Objekterfassungsdaten einfließen, um die mit der Erfindung verbundenen Vorteile zu mehren, insbesondere die Erfassungszuverlässigkeit zu steigern.

Vorzugsweise umfassen die Messwerte, die durch den Bildsensor ermittelt werden, zumindest Distanz- und/oder Intensitätswerte des Erfassungsbereichs. Die Distanzwerte repräsentieren allgemein einen Abstand bzw. eine Distanz zwischen der 3D-Kamera und einem Ortspunkt im Erfassungsbereich. Dieser Abstand kann z.B. durch Messung der Laufzeit eines gepulsten Lichtstrahls (z.B. Laser) von der Beleuchtungseinheit hin zu dem Ortspunkt (Reflexionspunkt) und von dem Ortspunkt zu einem Bildpunkt (Pixel) des Bildsensors ermittelt werden (time-of-flight Verfahren). Zusätzlich oder alternativ kann die Phasenverschiebung eines Lichtstrahls gemessen werden, der diesen Weg nimmt, um hieraus einen Distanzwert zu berechnen. Es kann für jeden Bildpunkt des Bildsensors ein jeweiliger Distanzwert ermittelt werden, um ein ortsaufgelöstes Tiefenbild zu erhalten, welches auch als 3D-Bild oder "3D-Punktwolke" bezeichnet werden kann.

Ein jeweiliger Intensitätswert des Erfassungsbereichs repräsentiert allgemein einen Helligkeitswert, der ebenfalls einem jeweiligen Bildpunkt des Bildsensors zugeordnet und etwa durch eine jeweilige Photodiode erfasst wird. Entsprechend zu den Distanzwerten kann für jeden Bildpunkt ein Intensitätswert ermittelt werden, um ein ortsaufgelöstes (2D) Helligkeitsbild des Erfassungsbereichs zu erhalten, welches auch als Amplitudenbild bezeichnet werden kann.

Im Allgemeinen sind die Distanz-und Intensitätswerte jeweils demselben Bildpunkt zugeordnet, durch den die jeweils betreffenden Distanz- und Intensitätswerte ermittelt werden. Distanz- und Intensitätswerte bilden somit einen bzw. mehrere Pixelwerte eines zugeordneten Pixels und repräsentieren einen jeweiligen Ortspunkt im Erfassungsbereich. Die Messwerte können auch als 3D-Punktwolke aufgefasst werden, weil durch die jeweiligen Distanzwerte nicht nur eine zweidimensionale sondern sogar eine dreidimensionale Verteilung von Punkten vorliegt.

Nach einer Ausführungsform umfassen die Messwerte der Objekterfassungsdaten Distanzwerte und Intensitätswerte des Erfassungsbereichs, wobei die Messwerte der Referenzerfassungsdaten Referenzdistanzwerte und Referenzintensitätswerte des Erfassungsbereichs umfassen. Die Referenzdistanzwerte werden durch Distanzwerte ermittelt, wenn sich kein Objekt in dem Erfassungsbereich befindet, wobei vorzugsweise der Erfassungsbereich von einer von der Beleuchtungseinheit ausgesandten Strahlung beaufschlagt ist. Die Referenzintensitätswerte werden hingegen durch Intensitätswerte ermittelt, wenn der Erfassungsbereich nicht von einer von der Beleuchtungseinheit ausgesandten Strahlung beaufschlagt ist, wobei sich Objekte in dem Erfassungsbereich befinden können. Allgemein können somit eine oder mehrere Referenzerfassungsbedingungen definiert werden. Eine Referenzerfassungsbedingung kann z.B. für die Referenzintensitätswerte dadurch definiert sein, dass der Erfassungsbereich nicht durch die Beleuchtungseinheit angestrahlt wird. Eine gegebenenfalls gewünschte Absenz von Objekten kann beispielsweise dadurch festgestellt werden, dass in Ermangelung von Objekten auch keine Modellobjekte ermittelt werden können. Es kann hierbei auch zwischen statischen Objekten und dynamischen Objekten unterschieden werden, sodass zur Einhaltung einer Referenzerfassungsbedingung nur auf dynamische Objekte bzw. Modellobjekte abgestellt wird. Es kann allerdings auch gewünscht sein, Referenzintensitätswerte in regelmäßigen zeitlichen Abständen unabhängig davon zu ermitteln, ob sich Objekte im Erfassungsbereich befinden. Eine entsprechende Referenzerfassungsbedingung kann somit wie oben angedeutet vorsehen, dass lediglich die Beleuchtungseinheit inaktiv ist. Eine Feststellung, ob Objekte vorhanden sind, wäre dann nicht notwendig.

Die Referenzintensitätswerte können wiederum zu einer ortsaufgelösten Karte zusammengefasst sein, welches zumindest das Hintergrundlicht repräsentiert, welches den Erfassungsbereich bei ausgeschalteter Beleuchtungseinheit beaufschlagt. Die Referenzintensitätswerte können dann auch als "Rauschkarte" oder "Ambient-Bild" bezeichnet werden. Darüber hinaus können die Referenzintensitätswerte auch im Sinne von herkömmlichen Grauwerten als ein Abbild des Erfassungsbereichs interpretiert werden.

Die Referenzintensitätswerte werden vorzugsweise in regelmäßigen zeitlichen Abständen ermittelt, insbesondere kurz vor oder nach dem Bestimmen von Objekterfassungsdaten. Es können während des Bestimmens der Referenzerfassungsdaten (d.h. während einer Referenzerfassungsbedingung) auch Objekte in dem Erfassungsbereich vorhanden sein, z.B. wenn lediglich Referenzintensitätswerte bestimmt werden.

Nach einer weiteren Ausführungsform werden für zumindest einige Bildpunkte des Bildsensors Relativintensitätswerte bestimmt, die jeweils für den betreffenden Bildpunkt ein Verhältnis zwischen einem Intensitätswert der Objekterfassungsdaten und einem Referenzintensitätswert der Referenzerfassungsdaten repräsentieren. Die Ermittlung des jeweiligen Modellobjekts kann dann vorteilhaft auf relative Objekterfassungsdaten gestützt werden, die auf der Grundlage zumindest einer vorbestimmten Relation von Messwerten zwischen den Objekterfassungsdaten und den Referenzerfassungsdaten und unter Heranziehung der Relativintensitätswerte bestimmt werden. Bei der vorbestimmten Relation kann es sich insbesondere um eine Differenz oder einen Quotienten handeln, sodass die relativen Objekterfassungsdaten eine Abweichung der Objekterfassungsdaten von den Referenzerfassungsdaten beschreiben. Durch Relativintensitätswerte wird eine SNR-Information und somit eine "Messgenauigkeit" bei der Ermittlung der Modellobjekte berücksichtigt, um die Erfassungsgenauigkeit zu verbessern bzw. unabhängig von einer jeweiligen Umgebungslichtsituation auf einem im Wesentlichen konstanten Niveau zu halten.

Allgemein ist es möglich, Differenzwerte zu bestimmen, die jeweils eine Differenz zwischen einem Distanzwert der Objekterfassungsdaten und einem Referenzdistanzwert der Referenzerfassungsdaten repräsentieren, wobei die Ermittlung des jeweiligen Modellobjekts auf die Differenzwerte gestützt wird. Die Differenzwerte bilden vorzugsweise die Grundlage zur Bestimmung der relativen Objekterfassungsdaten, die allgemein als "intrusion depth" aufgefasst werden können. Die relativen Objekterfassungsdaten können auch unmittelbar durch die Differenzwerte gebildet sein. Hierbei kann es sich zunächst um Rohdifferenzwerte (Differenzen zwischen den "unbehandelten" Distanzwerten) handeln, die zur Reduzierung von unerwünschten Einflüssen gefiltert werden, bevor die eventuell vorhandenen Modellobjekte ermittelt werden. Die Differenzwerte können insbesondere pro Bildpunkt bestimmt werden, z.B. für sämtliche Bildpunkte des Bildsensors. Auf diese Weise kann eine hochaufgelöste Darstellung des Erfassungsbereichs bereitgestellt werden.

Die Differenzwerte können einem ersten Schwellenwertfilter und/oder einem Faltungsfilter unterzogen werden, um die nachfolgende Ermittlung von Modellobjekten im Sinne einer hohen Erfassungspräzision zu verbessern. Hierbei kann das erste Schwellenwertfilter dazu angepasst sein, die Differenzwerte zu binarisieren, d.h. ein jeweiliger Differenzwert wird in Abhängigkeit eines Schwellenwerts entweder auf den Wert Null oder Eins gesetzt. Auf diese Weise kann entschieden werden, ob ein jeweiliger Differenzwert überhaupt zur nachfolgenden Ermittlung von Modellobjekten herangezogen werden soll oder nicht. Eher kleinere Differenzwerte, die beispielsweise aus Messfehlern resultieren können, können durch Binarisierung effizient weggefiltert werden. Es ist jedoch auch möglich, die Differenzwerte durch mehrere Schwellenwertfilter zu verarbeiten, um feinere Kriterien anzulegen. Das Faltungsfilter ist bevorzugt als Glättungsfilter ausgebildet. Auf diese Weise können auch hochfrequente Anteile in den Differenzwerten, die ebenfalls durch unerwünschte Messungenauigkeiten hervorgerufen sein können, reduziert werden. Das Glättungsfilter kann durch einen gleitenden Mittelwert, d.h. durch ein gleitendes Mittelwertfilter realisiert werden.

Nach einer weiteren Ausführungsform können Relativwerte auf der Grundlage einer vorbestimmten Relation zwischen Messwerten der Objekterfassungsdaten und Messwerten der Referenzerfassungsdaten bestimmt und auf die Differenzwerte angewendet werden, z.B. indem die Differenzwerte mit den Relativwerten gewichtet werden. Bestimmte Informationen, die in den Differenzwerten versteckt oder kodiert sind, werden durch die Relativwerte hervorgehoben. Die Relativwerte können z.B. Relativdistanzwerte umfassen, die jeweils ein Verhältnis zwischen einem Differenzwert und einem Referenzdistanzwert der Referenzerfassungsdaten repräsentieren. Durch Gewichtung der Differenzwerte, bei denen es sich insbesondere um Rohdifferenzwerte handeln kann, mit Relativdistanzwerten können solche Differenzwerte, die stark von einem jeweils zugeordneten Referenzdistanzwert abweichen, in den relativen Objekterfassungsdaten betont, d.h. angehoben werden.

Alternativ oder zusätzlich können die Relativwerte Relativintensitätswerte umfassen, die jeweils ein Verhältnis zwischen einem Intensitätswert der Objekterfassungsdaten und einem Referenzintensitätswert der Referenzerfassungsdaten repräsentieren. Durch eine Gewichtung der Differenzwerte mit den Relativintensitätswerten kann eine vorteilhafte Kontrasterhöhung herbeigeführt werden. Die gewichteten Differenzwerte können zudem allgemein so interpretiert werden, dass sie eine Relevanz der zugrundeliegenden Messwerte repräsentieren.

Nach einer weiteren Ausführungsform können die Differenzwerte einem zweiten Schwellenwertfilter unterzogen werden. Dies kann sinnvoll sein, weil die vormals binären Differenzwerte durch die mögliche Glättung und Gewichtung mit Relativwerten wieder einen kontinuierlichen Wertebereich abdecken können, der für die Ermittlung der insbesondere binären Modellobjekte nicht immer besonders vorteilhaft ist. Zu diesem Zweck kann das zweite Schwellenwertfilter vorgesehen werden, welches unterschiedlich zu dem ersten Schwellenwertfilter ausgebildet sein kann. Das zweite Schwellenwertfilter kann auf wenigstens einem Schwellenwert basieren, der konstant oder abhängig von den Objekterfassungsdaten und/oder den Referenzerfassungsdaten und/oder einer Bildpunktposition ist. Mit anderen Worten kann der Schwellenwert vordefiniert oder dynamisch bestimmt werden. Der Schwellenwert kann dynamisch z.B. in Abhängigkeit des Signal-zu-Rausch-(SNR)-Verhältnisses, allgemein insbesondere im Sinne der sogenannten "constant false alarm rate (CFAR), definiert sein. Im Hinblick auf eine möglichst schnelle, insbesondere echtzeitfähige Anwendung des Verfahrens ist jedoch ein konstanter Schwellenwert bevorzugt. Ferner ist das zweite Schwellenwertfilter vorzugsweise dazu angepasst, die Differenzwerte zu binarisieren.

Die vorstehend genannten Verfahrensschritte bezüglich der Differenzwerte können in der vorstehend genannten Reihenfolge durchgeführt werden. Es sind jedoch auch abweichende Reihenfolgen möglich, wobei auch andere Kombinationen von Verfahrensschritten denkbar sind, die nicht sämtliche der vorstehend genannten Verfahrensschritte oder andere Verfahrensschritte umfassen.

Wie bereits oben angedeutet, können die Differenzwerte jeweils für einen zugeordneten Bildpunkt des Bildsensors bestimmt werden, sodass stets von einem ortsaufgelösten Differenzbild bzw. einer Referenzkarte des Erfassungsbereichs ausgegangen werden kann.

Nach einer weiteren Ausführungsform wird das jeweilige Modellobjekt auf der Grundlage der Differenzwerte ermittelt, wobei die Differenzwerte zu einer Karte (d.h. einem ortsaufgelösten Bild) zusammengefasst sind, die den Erfassungsbereich repräsentiert. Die Karte kann dann einer Clusteranalyse, bevorzugt einem Bildsegmentierungsverfahren unterzogen werden, um das jeweilige Modellobjekt zu ermitteln. Da der Ermittlung von Modellobjekten hierbei Differenzwerte zugrunde gelegt werden, die neben der zweidimensionalen Karte als dritte Dimension zugeordnete Distanzwerte repräsentieren, kann ein jeweiliges Modellobjekt allgemein dreidimensional definiert sein. Wie bereits weiter oben erwähnt kann ein Modellobjekt beispielsweise als Quader ausgebildet sein, wobei zusätzlich zu den klassischen Parametern eines Quaders weitere Parameter zur Definition des Modellobjekts verwendet werden können. Eine etwaige nachfolgende Auswertung mehrerer Modellobjekte kann unter Berücksichtigung zusätzlicher Parameter, welche zusätzlich zu einer geometrischen Definition eines Modellobjekts dienen, vereinfacht oder verbessert werden.

Ein jeweiliger Differenzwert kann auf der Grundlage des zugehörigen Distanzwerts und vordefinierter Kameraparameter (z.B. Einstellwinkel der 3D-Kamera und Anbauhöhe) in einen Raumpunkt umgerechnet werden, der insbesondere die Position des Reflexionspunkts bei der Ermittlung des Distanzwerts angibt.

Im Zuge der Ermittlung des jeweiligen Modellobjekts werden die zugrundeliegenden Differenzwerte vorzugsweise binär dahingehend ausgewertet, ob ein betreffender Differenzwert von einem Objekt verursacht worden ist, oder nicht. Sofern ein Differenzwert als von einem Objekt verursacht klassifiziert wird, wird dieser Differenzwert geometrisch regelmäßig innerhalb des Modellobjekts liegen und somit dem Modellobjekt zugeordnet. Das finale Modellobjekt wird dann einen Cluster von Differenzwerten beinhalten, die von dem Modellobjekt umgeben sind. Einzelne Differenzwerte können geometrisch gesehen aber auch außerhalb eines Modellobjekts liegen. Das Modellobjekt kann in tatsächliche Raumgrößen umgerechnet werden, sodass die Größenparameter des Modellobjekts zumindest annähernd mit den Größen des Objekts korrespondieren. Die dem Modellobjekt zugeordneten Differenzwerte können wie erwähnt in Raumpunkte umgerechnet werden, die zumindest überwiegend innerhalb des Modellobjekts liegen.

Ein jeweiliges Modellobjekt kann zumindest durch einen der folgenden Parameter definiert sein:
- Position eines einem maximalem Differenzwert zugeordneten Raumpunkts, wobei der maximale Differenzwert dem jeweiligen Modellobjekt zugeordnet ist und eine maximale Differenz zwischen einem Distanzwert der Objekterfassungsdaten und einem Referenzdistanzwert der Referenzerfassungsdaten repräsentiert;
- relative Anzahl von dem jeweiligen Modellobjekt zugeordneten Differenzwerten, die jeweils eine Differenz zwischen einem Distanzwert der Objekterfassungsdaten und einem Referenzdistanzwert der Referenzerfassungsdaten repräsentieren und größer einem vorbestimmten Schwellenwert sind;
- Position des jeweiligen Modellobjekts;
- wenigstens einen Größenparameter des Modellobjekts;
- minimaler Distanzwert der Bildpunkte, deren Differenzwerte dem jeweiligen Modellobjekt zugeordnet sind und/oder Position eines dem minimalen Distanzwert zugeordneten Raumpunkts;
- maximaler Distanzwert der Bildpunkte, deren Differenzwerte dem jeweiligen Modellobjekt zugeordnet sind und/oder Position eines dem maximalen Distanzwert zugeordneten Raumpunkts.

Es ist möglich, ein jeweiliges Modellobjekt durch sämtliche oder eine Kombination von einigen der oben genannten Parameter zu definieren. Ferner kann ein jeweiliges Modellobjekt durch lediglich einen der genannten Parameter definiert sein.

Die Position eines einem maximalem Differenzwert zugeordneten Raumpunkts kann aufgrund der hohen Abweichung von den Referenzdaten als besonders relevant für die Objekterfassung angesehen werden. Die Position dieses Raumpunkts kann insofern auch als Schwerpunkt des betreffenden Modellobjekts interpretiert werden.

Die relative Anzahl von Differenzwerten "innerhalb des jeweiligen Modellobjekts", die einen Differenzwert größer einem vorbestimmten Schwellenwert aufweisen, kann auch Füllgrad des Modellobjekts bezeichnet werden.

Die Position eines Raumpunkts kann bezüglich eines vorbestimmten Koordinatensystems definiert sein (z.B. ein kartesisches Koordinatensystem).

Die Erfindung bezieht sich ferner auf einen optischen Sensor, der wenigstens eine 3D-Kamera, bevorzugt eine TOF-(time of flight)-Kamera, mit einer Beleuchtungseinheit, einem Bildsensor sowie einer Steuer- und Auswerteeinheit aufweist, wobei die Steuer- und Auswerteeinheit dazu angepasst ist, das Verfahren nach zumindest einem der vorstehend beschriebenen Ausführungsformen durchzuführen. Vorzugsweise ist das Verfahren als one-pass-Algorithmus implementiert, insbesondere in einem field-programmable-gate array. Auf diese Weise kann die Zuverlässigkeit und Effizienz des Verfahrens weiter gesteigert werden.

Die Erfindung bezieht sich ferner auf ein autonomes Fahrzeug mit einem optischen Sensor, welcher insbesondere dem vorstehend genannten optischen Sensor entsprechen kann. Das Fahrzeug weist eine Antriebssteuerung auf, die dazu angepasst ist, das Fahrzeug unter Berücksichtigung, d.h. auf der Grundlage von geschätzten Bewegungsvektoren zu steuern.

Die Erfindung wird nachfolgend lediglich beispielhaft anhand der Zeichnungen erläutert, in denen:
- Fig. 1: schematisch ein autonomes Fahrzeug mit einem optischen Sensor zur Erfassung von Objekten zeigt;
- Fig. 2: perspektivisch ein weiteres autonomes Fahrzeug mit einem optischen Sensor zur Erfassung von Objekten zeigt;
- Fig. 3: ein Ablaufdiagramm zur Veranschaulichung eines Algorithmus zur Ermittlung von Modellobjekten zeigt;
- Fig. 4: eine schematische Visualisierung von Parametern eines Modellobjekts zeigt;
- Fig. 5: eine schematische Visualisierung eines "Füllgrad"-Parameters eines Modellobjekts zeigt, wobei Fig. 5a ein Modellobjekt mit einem hohen Füllgrad und Fig. 5b ein Modellobjekt mit einem geringen Füllgrad zeigt;
- Fig. 6: das Fahrzeug von Fig. 1 zeigt, welches in Abhängigkeit einer Bewegungsbahn eines Objekts gesteuert wird.

In den Figuren sind ähnliche oder sich entsprechende Elemente mit denselben Bezugszeichen gekennzeichnet.

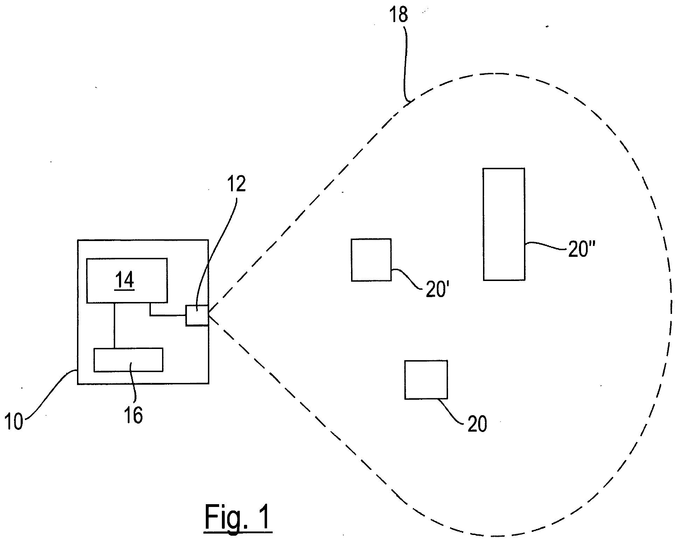

Fig. 1 zeigt schematisch ein autonomes Fahrzeug 10, welches einen optischen Sensor 12, eine Antriebssteuerung 16 für das Fahrzeug 10 sowie eine Steuer- und Auswerteeinheit 14 aufweist, die mit dem optischen Sensor 12 und der Antriebssteuerung 16 verbunden ist. Der optische Sensor 12 umfasst eine TOF-(time-of-flight)-Kamera mit einem Bildsensor sowie einer Beleuchtungseinheit (nicht gezeigt). Der optische Sensor 12 ist dazu angepasst, Messwerte eines mittels einer gestrichelten Linie angedeuteten dreidimensionalen Erfassungsbereichs 18 zu ermitteln. Auf der Grundlage der ermittelten Messwerte werden dann unter Verwendung der Steuer- und Auswerteeinheit 14 Objekte 20, 20', 20" erfasst, die sich in dem Erfassungsbereich 18 befinden. Die in Fig. 1 schematisch angedeuteten Objekte 20, 20', 20" können grundsätzlich beliebig geformt und in dem Erfassungsbereich 18 angeordnet sein. Es ist auch möglich, dass sich noch weitere Objekte oder auch keine Objekte in dem Erfassungsbereich 18 befinden. Die Beleuchtungseinheit (nicht gezeigt) ist in den optischen Sensor 12 integriert und dient dazu, den Erfassungsbereich 18 zu beleuchten, um präzisere Messwerte zu erhalten. Insbesondere kann der Erfassungsbereich 18 beleuchtet werden, wenn sich die Objekte 20, 20', 20" in dem Erfassungsbereich 18 befinden und zu deren Erfassung Distanz- und Intensitätswerte ermittelt werden. Dies wird nachfolgend noch genauer erläutert.

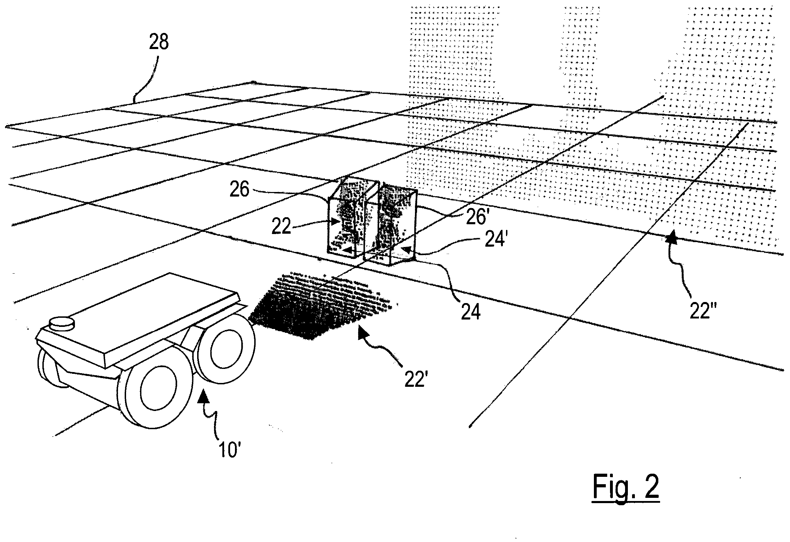

In Anlehnung an das anhand von Fig. 1 erläuterte Erfassungsszenario ist in Fig. 2 eine Perspektivansicht auf ein autonomes Fahrzeug 10' gezeigt, welches entsprechend zu dem autonomen Fahrzeug 10 von Fig. 1 ausgebildet ist. Das autonome Fahrzeug 10' befindet sich auf einem kariert angedeuteten Boden 28. Der optische Sensor 12 des Fahrzeugs 10', der in Fig. 2 nicht gezeigt ist, liefert eine Vielzahl von Messwerten 22 (oder Messpunkten), die jeweils einen Punkt im Raum (Raumpunkt) repräsentieren und in Fig. 2 als 3D-Punktwolken angedeutet sind.

Die Messwerte 22 umfassen Distanzwerte, die jeweils einen Abstand zwischen dem optischen Sensor 12 und einem (Reflexions-)punkt im Raum angeben. Die zweidimensionale Verteilung der Messwerte 22 in Fig. 2 ergibt sich aus einer zweidimensionalen Erstreckung des Bildsensors der in den optischen Sensor 12 integrierten TOF-Kamera, die vorzugsweise mit einer Optik ausgestattet ist (nicht gezeigt). Anstelle eines im Wesentlichen quadratischen Bildsensors sind aber auch andere Anordnungen von Photodioden denkbar, z.B. linear angeordnete Photodioden.

Eine erste Gruppe von Messwerten 22' weist relativ kurze Distanzwerte auf, sodass sich die entsprechenden Punkte im Raum relativ nah vor dem Fahrzeug 10' befinden (Fig. 2). Eine weitere Gruppe von Messwerten 22" besitzt relativ große Distanzwerte, sodass sich die entsprechenden Punkte im Raum vergleichsweise weit vor dem Fahrzeug 10' befinden (vgl. auch Fig. 2). Die Messwerte 22" sind auf einen vordefinierten Maximalwert beschränkt. Die zwischen den "nahen" Messwerten 22' und den "fernen" Messwerten 22" befindlichen Messwerte 22 sind durch zwei benachbart zueinander angeordneten menschliche Beine 24, 24' verursacht und bilden dementsprechend zwei Cluster von Messwerten 22. Die Beine 24, 24' sind in Fig. 2 nur durch verursachten Messwerte 22 angedeutet. Im Zuge einer nachfolgend noch genauer erläuterten Auswertung der Messwerte 22 wird für jedes Cluster bzw. jedes Bein 24, 24' ein Modellobjekt 26, 26' ermittelt, welches ein jeweils zugrunde liegendes Objekt, im vorliegenden Fall also ein jeweiliges Bein 24, 24' repräsentiert. Auf diese Weise werden Objekte erfasst.

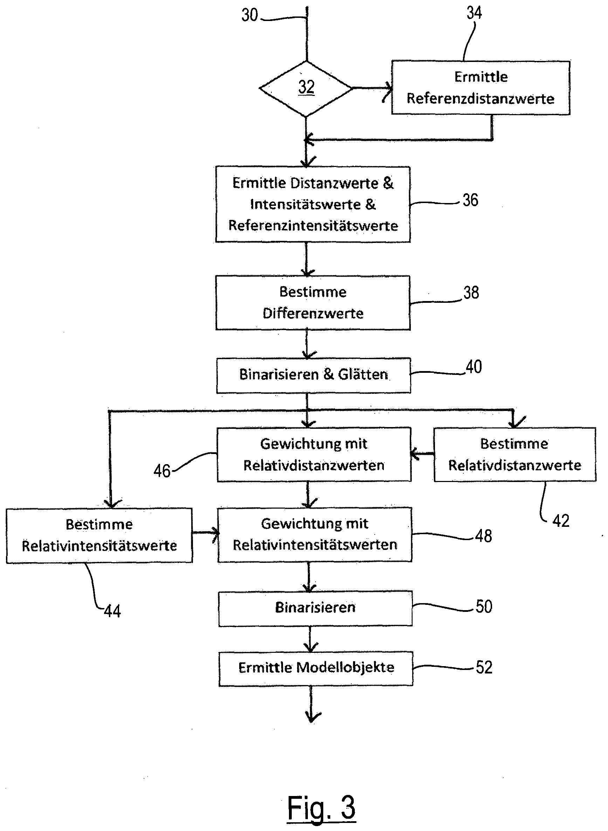

Ein Verfahren zur Erfassung von Objekten wird nachfolgend anhand von Fig. 3 erläutert. Das Verfahren beginnt bei der Bezugsziffer 30. Im Entscheidungspunkt 32 wird überprüft, ob Referenzdistanzwerte vorliegen oder nicht. Sofern Referenzdistanzwerte nicht vorliegen, werden diese in Schritt 34 ermittelt. Die Referenzdistanzwerte werden vorzugsweise unter einer Referenzerfassungsbedingung ermittelt, wobei sichergestellt wird, dass sich keine dynamischen Objekte in dem Erfassungsbereich 18 befinden und dieser während der Erfassung der Referenzdistanzwerte durch die Beleuchtungseinheit beleuchtet wird. Sofern im Entscheidungspunkt 32 festgestellt wird, dass die Referenzdistanzwerte bereits vorliegen, wird direkt mit Schritt 36 fortgefahren. In Schritt 36 werden allgemein Objekterfassungsdaten sowie weitere Referenzerfassungsdaten (zusätzlich zu den Referenzdistanzwerten) bestimmt. Insbesondere werden in Schritt 36 Distanzwerte, Intensitätswerte sowie Referenzintensitätswerte des Erfassungsbereichs 18 ermittelt. In Schritt 38 werden sodann Differenzwerte bestimmt, die jeweils für einen Bildpunkt eine Differenz zwischen einem Distanzwert und einem Referenzdistanzwert repräsentieren und dementsprechend auch als Differenzdistanzwerte bezeichnet werden können. In Schritt 40 werden die Differenzwerte einem ersten Schwellenwertfilter und einem Glättungsfilter unterzogen, um eine nachfolgende Auswertung der Differenzwerte zu erleichtern.

Das erste Schwellenwertfilter ist vorzugsweise dazu ausgelegt, die Differenzwerte zu binarisieren. Auf der Grundlage der Differenzwerte werden Relativdistanzwerte (Schritt 42) sowie Relativintensitätswerte (Schritt 44) bestimmt. Anstelle der durch Schritt 40 gefilterten Differenzwerte können auch die ungefilterten Differenzwerte verwendet werden. Die Relativdistanzwerte können als Relativdifferenzdistanzwerte ermittelt werden, indem jeweils ein Quotient zwischen den Differenzwerten und den Referenzdistanzwerten berechnet wird. Die Relativintensitätswerte werden vorzugsweise jeweils durch einen Quotienten zwischen den Intensitätswerten und den Referenzintensitätswerten gebildet. Die Relativintensitätswerte repräsentieren ein Signal-zu-Rausch Verhältnis des optischen Sensors 12.

In Schritt 46 werden die ungefilterten Differenzwerte mit den Relativdistanzwerten aus Schritt 42 gewichtet, insbesondere multipliziert. In Schritt 48 werden die Differenzwerte zusätzlich mit den Relativintensitätswerten gewichtet, insbesondere multipliziert. Sodann werden die Differenzwerte durch ein zweites Schwellenwertfilter in Schritt 50 binarisiert. Auf der Grundlage der erhaltenen Differenzwerte werden sodann Modellobjekte in Schritt 52 ermittelt, insbesondere unter Verwendung eines Segmentierungsverfahrens auf der Grundlage der Differenzwerte. Hierbei können auch weitere Daten herangezogen werden, insbesondere unverarbeitete Rohmesswerte des optischen Sensor 12 sowie Einstellungsparameter der TOF-Kamera. Beispielhaft sind in Fig. 2 die Modellobjekte 26, 26' gezeigt, die im Wesentlichen quaderförmig sind.

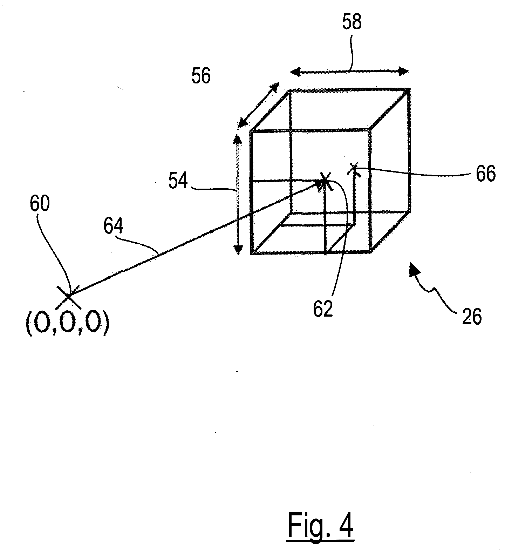

In Fig. 4 ist ein weiteres Modellobjekt 26 gezeigt, welches ebenfalls quaderförmig ausgebildet ist. Sämtliche Differenzwerte, die einem jeweiligen Modellobjekt 26 zugeordnet werden, repräsentieren Punkte, die sich im Wesentlichen innerhalb des Modellobjekts 26 befinden. Das Modellobjekt 26 kann insofern als eine modellierte "Hülle" des zugrundeliegenden Objekts interpretiert werden. Das Modellobjekt 26 kann allgemein durch mehrere geometrische Parameter definiert werden. Insbesondere kann das Modellobjekt 26 durch eine Höhe 54, eine Tiefe 56 und eine Breite 58 definiert sein. Da die Messwerte 22 in Bezug auf den optischen Sensor 12 ermittelt werden, kann als Bezug für das Modellobjekt 26 ein Punkt 60 angegeben werden, der die Position des optischen Sensors 12 als Ursprung eines Koordinatensystems (z.B. 0, 0, 0) angibt. Innerhalb des Modellobjekts 26 wird ein Punkt 62 identifiziert, der einen Messwert mit einer minimalen Distanz zum Punkt 60 aufweist. Die entsprechende Distanz ist durch einen Abstandsvektor 64 angedeutet. Die Position des Punkts 62 kann als weiterer Parameter des Modellobjekts 26 herangezogen werden. Darüber hinaus kann die Position eines Punktes 66 als Parameter für das Modellobjekt 26 herangezogen werden. Der dem Punkt 66 zugrunde liegende Messwert ist vorzugsweise durch einen maximalen Differenzwert gekennzeichnet und stellt insofern einen Messwert dar, der zur Charakterisierung des durch das Modellobjekt 26 zu erfassenden Objekts 24 eine besondere Relevanz besitzt. Im Hinblick auf die Steuerung des autonomen Fahrzeugs 10, 10' können potentielle Kollisionen mit einem Objekt besonders gut verhindert werden, wenn die Position des Punkts 66 als Parameter für das Modellobjekt 26 verwendet wird.

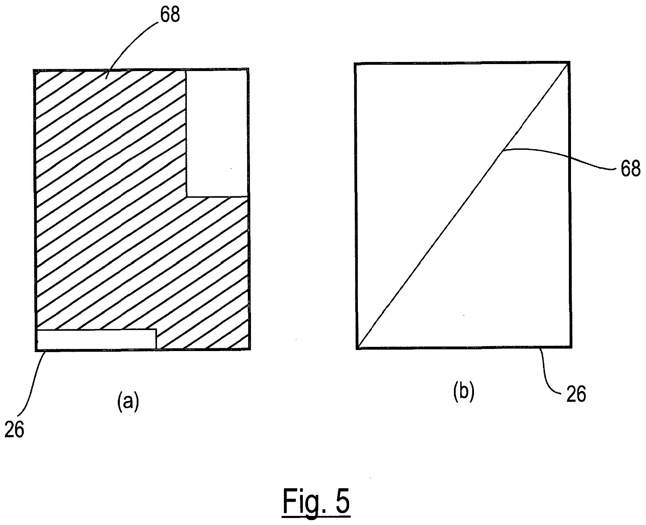

Als weiterer Parameter für das Modellobjekt 26 kann ein Füllgrad definiert werden, dessen Bedeutung in Fig. 5 veranschaulicht ist. Der Füllgrad ist durch die relative Anzahl von Punkten innerhalb des jeweiligen Modellobjekts 26 definiert, die jeweils einen Differenzwert zwischen einem Distanzwert und einem Referenzdistanzwert aufweisen, welcher jeweils größer als ein vorbestimmter Schwellenwert ist. Mit anderen Worten gibt der Füllgrad an, wieviele Messpunkte innerhalb eines Modellobjekts 26 tatsächlich "auf/in dem Objekt liegen", welches durch das Modellobjekt 26 repräsentiert wird. Je höher der Füllgrad, desto eher kann davon ausgegangen werden, dass die Umrisse des Modellobjekts 26 eine tatsächliche Größe oder Form des zu erfassenden Objekts beschreiben. In Fig. 5a ist ein Modellobjekt 26 mit einer hohen relativen Zahl von Punkten 68 gezeigt, die höher als der vorbestimmte Schwellenwert (z.B. Null) sind und dementsprechend zu einem hohen Füllgrad führen. Diese Punkte 68 sind in Fig. 5a durch eine schraffierte Fläche angedeutet. Im Gegensatz hierzu besitzt das in Fig. 5b gezeigte Modellobjekt 26 eine geringe Zahl von solchen Punkten 68, die entlang einer Linie angeordnet sind. Das Modellobjekt 26 beschreibt die Form des Objekts, welches die Punkte 68 "verursacht" hat, somit vergleichsweise rudimentär. Die Berücksichtigung des Füllgrads zur Definition der Modellobjekte 26 führt zu einer zuverlässigeren Steuerung von autonomen Fahrzeugen 10, 10', die in Abhängigkeit solcher Modellobjekte 26 gesteuert werden.

Es versteht sich, dass noch weitere oder andere Parameter zur Definition der Modellobjekte 26 verwendet werden können. Die Modellobjekte 26 führen zu einer signifikanten Datenreduktion gegenüber den zugrundeliegenden Messwerten. Gleichzeitig wird durch ein jeweiliges Modellobjekt 26 ein geometrisch eindeutiger Korridor definiert, aus dem klar hervorgeht, ab wann eine potentielle Kollision mit hoher Wahrscheinlichkeit zu erwarten wäre. Komplexe Objektformen werden somit im Sinne einer zuverlässigen Vermeidung von Objektkollisionen großzügig abstrahiert bzw. modelliert. Als besonders vorteilhaft hat sich erwiesen, wenn durch die beschriebene Parametrierung der Modellobjekte 26 im Wesentlichen quaderförmige Modellobjekte vorgesehen werden.

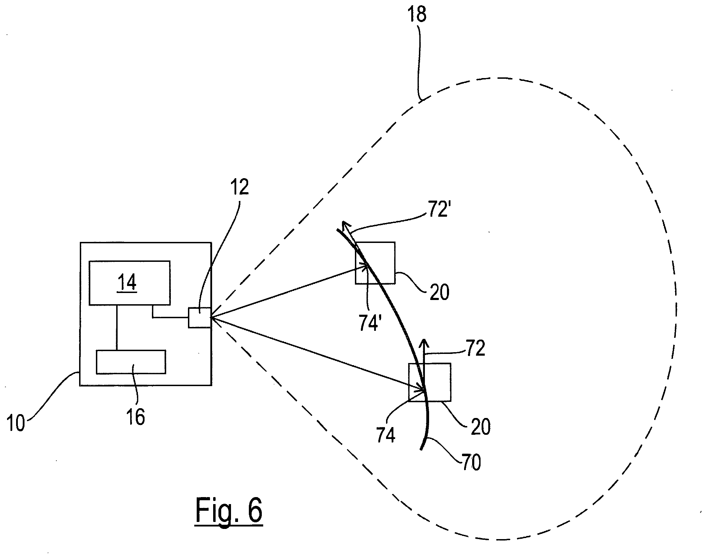

In Fig. 6 ist nochmal das Szenario von Fig. 1 gezeigt, wobei sich im Erfassungsbereich 18 abweichend zu Fig. 1 lediglich ein einzelnes Objekt 20 befindet, welches sich entlang einer Bewegungsbahn 70 bewegt. Das Objekt 20 ist in Fig. 6 zweimal gezeigt, um die Position des Objekts 20 zu zwei verschiedenen Zeitpunkten anzugeben. Für jeden dieser beispielhaften Zeitpunkte wird ein jeweiliges in Fig. 6 nicht explizit dargestelltes Modellobjekt 26 ermittelt, welches das Objekt 20 repräsentiert. Zusätzlich wird ein jeweiliger Bewegungsvektor 72, 72' geschätzt, welcher die temporäre Bewegung des Objekts 20 repräsentiert und vorzugsweise für einen jeweiligen Bezugspunkt 74, 74' definiert ist. Ein jeweiliger Bewegungsvektor 72, 72' kann hierbei auf der Grundlage einer Folge, d.h. einer zeitlichen Abfolge von Modellobjekten 26 geschätzt werden. Die Bewegungsvektoren 72, 72' bilden eine Folge von Bewegungsvektoren auf deren Grundlage die Bewegungsbahn 70 geschätzt werden kann. Die Bewegungsbahn 70 kann extrapolierte oder interpolierte Abschnitte umfassen, sodass die Bewegungsbahn 70 nicht auf diskrete Messzeitpunkte beschränkt ist.

Zur Schätzung eines jeweiligen Bewegungsvektors 72, 72' bzw. einer jeweiligen Bewegungsbahn 70 wird für jedes Objekt 20 ein Kalman-Filter instanziiert.

Insbesondere kann mittels des Kalman-Filters ein zukünftiger Bewegungsabschnitt des Objekts 20 ermittelt werden, sodass das Fahrzeug 10 vorausschauend eine Kurs- oder Geschwindigkeitsänderung einleiten kann, um eine Kollision mit dem Objekt 20 zu vermeiden.

Alternativ wird das Fahrzeug 10 in Abhängigkeit von der Bewegungsbahn 70 angesteuert, um das Objekt 20 automatisch von dem Fahrzeug 10 verfolgen zu lassen.

### Bezuqszeichenliste

- 10, 10': autonomes Fahrzeug
- 12: optischer Sensor
- 14: Steuer- und Auswerteeinheit
- 16: Antriebssteuerung
- 18: Erfassungsbereich
- 20, 20', 20": Objekt
- 22, 22', 22": Messwerte
- 24, 24': Bein
- 26, 26': Modellobjekt
- 28: Boden
- 30: Beginn des Verfahrens
- 32: Entscheidungspunkt
- 34: Ermittlung von Referenzdistanzwerten
- 36: Ermittlung von Objekt- und Referenzerfassungsdaten
- 38: Bestimmung von Differenzwerten
- 40: Filterung von Differenzwerten
- 42: Bestimmung von Relativdifferenzwerten
- 44: Bestimmung von Relativintensitätswerten
- 46: Gewichtung mit Relativdifferenzwerten
- 48: Gewichtung mit Relativintensitätswerten
- 50: Filterung von gewichteten Differenzwerten
- 52: Ermittlung von Modellobjekten
- 54: Höhe
- 56: Tiefe
- 58: Breite
- 60: Position der 3D-Kamera
- 62: Position eines Punkts mit minimaler Distanz zur Position der 3D-Kamera
- 64: Abstandsvektor
- 66: Position eines Punkts innerhalb des Modellobjekts mit einem maximalen Differenzwert
- 68: Punkte innerhalb des Modellobjekts mit Differenzwerten oberhalb eines Schwellenwerts
- 70: Bewegungsbahn
- 72, 72': Bewegungsvektor
- 74, 74': Bezugspunkt für einen Bewegungsvektor

## Patentansprüche

1. Verfahren zur Steuerung eines autonomen Fahrzeugs (10, 10'), welches einen, optischen Sensor (12) zur Erfassung von Objekten (20, 20', 20") in einem Erfassungsbereich (18) des Sensors (12) aufweist, wobei der optische Sensor (12) wenigstens eine 3D-Kamera, bevorzugt eine TOF-(time of flight)-Kamera, mit einer Beleuchtungseinheit und einem Bildsensor aufweist,
wobei das Verfahren umfasst:
- Ermitteln von Messwerten (22, 22', 22") des Erfassungsbereichs (18), wobei die Messwerte (22, 22', 22") zumindest Distanzwerte umfassen, wobei die Messwerte (22, 22', 22") separat für einzelne Bildpunkte des Bildsensors ermittelt werden und zusätzlich zu den Distanzwerten Intensitätswerte des Erfassungsbereichs (18) umfassen, die unter Verwendung des optischen Sensors (12) ermittelt werden;
- Bestimmen von Objekterfassungsdaten umfassend zumindest Messwerte (22, 22', 22") des Erfassungsbereichs (18), die ermittelt werden, wenn sich Objekte (20, 20', 20", 24, 24') in dem Erfassungsbereich (18) befinden und der Erfassungsbereich (18) bevorzugt von einer von der Beleuchtungseinheit ausgesandten Strahlung beaufschlagt ist;
- Bestimmen von Referenzerfassungsdaten umfassend zumindest Messwerte (22, 22', 22") des Erfassungsbereichs (18), die ermittelt werden, wenn sich kein Objekt (20, 20', 20", 24, 24') in dem Erfassungsbereich (18) befindet und/oder der Erfassungsbereich (18) nicht von einer von der Beleuchtungseinheit ausgesandten Strahlung beaufschlagt ist;
- Ermitteln von Modellobjekten (26, 26') auf der Grundlage der Messwerte (22, 22', 22"), um Objekte (20, 20', 20", 24, 24') in dem Erfassungsbereich (18) zu erfassen, wobei ein jeweiliges Objekt (20, 20', 20", 24, 24') durch ein jeweiliges Modellobjekt (26, 26') repräsentiert wird, wobei das Ermitteln von Modellobjekten (26, 26') auf der Grundlage der Objekterfassungsdaten und der Referenzerfassungsdaten erfolgt;
- Schätzen eines Bewegungsvektors (72, 72') auf der Grundlage des jeweiligen Modellobjekts (26, 26'), wobei der Bewegungsvektor (72, 72') eine Bewegung des jeweiligen Objekts (20, 20', 20", 24, 24') repräsentiert; und
- Steuern des autonomen Fahrzeugs (10, 10') auf der Grundlage des Bewegungsvektors (72, 72').

2. Verfahren nach Anspruch 1,
wobei der Bewegungsvektor (72, 72') eine Information über eine Bewegungsgeschwindigkeit des jeweiligen Objekts (20) und/oder eine Bewegungsrichtung des jeweiligen Objekts (20) und/oder einen Abstand, insbesondere eine Abstandsänderung, zwischen dem jeweiligen Objekt (20) und dem optischen Sensor (12) umfasst.

3. Verfahren nach Anspruch 1 oder 2,
wobei der Bewegungsvektor (72, 72') unter Verwendung eines Tracking-Algorithmus, bevorzugt eines Kalman-Filters geschätzt wird.

4. Verfahren nach Anspruch 3,
wobei der Tracking-Algorithmus dazu angepasst ist, den Bewegungsvektor (72, 72') auf der Grundlage von ein oder mehreren Parametern des jeweiligen Modellobjekts (26, 26') zu berechnen, wobei der Bewegungsvektor (72, 72') eine Bewegung des jeweiligen Objekts (20) bevorzugt ausschließlich in Bezug auf eine definierte Position des jeweiligen Modellobjekts (26, 26') repräsentiert.

5. Verfahren nach zumindest einem der vorherigen Ansprüche,
wobei die Messwerte (22, 22', 22") als eine Folge von mehreren Einzelbildern des Erfassungsbereichs (18) ermittelt werden, wobei das Ermitteln von Modellobjekten (26, 26') jeweils auf der Grundlage eines Einzelbilds der Folge von mehreren Einzelbildern durchgeführt wird, um eine Folge von mehreren Modellobjekten (26, 26') zu erhalten.

6. Verfahren nach zumindest einem der vorherigen Ansprüche,
wobei der Bewegungsvektor (72, 72') auf der Grundlage einer Folge von mehreren Modellobjekten (26, 26') geschätzt wird.

7. Verfahren nach zumindest einem der vorherigen Ansprüche,
wobei eine Folge von mehreren Bewegungsvektoren (72, 72') ausgewertet wird, um eine Bewegungsbahn (70) des jeweiligen Objekts (20) zu schätzen, und wobei das autonome Fahrzeug (10, 10') in Abhängigkeit von der Bewegungsbahn (70) gesteuert wird.

8. Verfahren nach Anspruch 7,
wobei die Bewegungsbahn (70) zumindest einen Abschnitt umfasst, der eine erwartete zukünftige Bewegungsbahn (70) des jeweiligen Objekts (20) repräsentiert.

9. Verfahren nach Anspruch 7 oder 8,
wobei das autonome Fahrzeug (10, 10') in Abhängigkeit von der Bewegungsbahn (70) derart gesteuert wird, dass eine potentielle Kollision durch Anpassen der Fahrzeugbewegung vermieden wird, insbesondere wobei das Anpassen der Fahrzeugbewegung eine Richtungsänderung und/oder eine Geschwindigkeitsänderung des autonomen Fahrzeugs (10, 10') umfasst.

10. Verfahren nach einem der Ansprüche 7 bis 9,
wobei das autonome Fahrzeug (10, 10') in Abhängigkeit von der Bewegungsbahn (70) gesteuert wird, um das autonome Fahrzeug (10, 10') dem Objekt (20) nachzuführen.

11. Verfahren nach zumindest einem der vorherigen Ansprüche,
wobei das jeweilige Modellobjekt (26, 26') zumindest durch einen der folgenden Parameter definiert ist:
- Position eines einem maximalem Differenzwert zugeordneten Raumpunkts, wobei der maximale Differenzwert dem jeweiligen Modellobjekt (26, 26') zugeordnet ist und eine maximale Differenz zwischen einem Distanzwert der Objekterfassungsdaten und einem Referenzdistanzwert der Referenzerfassungsdaten repräsentiert;
- relative Anzahl von dem jeweiligen Modellobjekt (26, 26') zugeordneten Differenzwerten, die jeweils eine Differenz zwischen einem Distanzwert der Objekterfassungsdaten und einem Referenzdistanzwert der Referenzerfassungsdaten repräsentieren und größer einem vorbestimmten Schwellenwert sind;
- Position des jeweiligen Modellobjekts (26, 26');
- wenigstens einen Größenparameter (54, 56, 58) des jeweiligen Modellobjekts (26, 26');
- minimaler Distanzwert der Bildpunkte, deren Differenzwerte dem jeweiligen Modellobjekt (26, 26') zugeordnet sind und/oder Position eines dem minimalen Distanzwert zugeordneten Raumpunkts (62), wobei die Differenzwerte jeweils eine Differenz zwischen einem Distanzwert der Objekterfassungsdaten und einem Referenzdistanzwert der Referenzerfassungsdaten repräsentieren;
- maximaler Distanzwert der Bildpunkte, deren Differenzwerte dem jeweiligen Modellobjekt (26, 26') zugeordnet sind und/oder Position eines dem maximalen Distanzwert zugeordneten Raumpunkts, wobei die Differenzwerte jeweils eine Differenz zwischen einem Distanzwert der Objekterfassungsdaten und einem Referenzdistanzwert der Referenzerfassungsdaten repräsentieren.

12. Optischer Sensor (12), der wenigstens eine 3D-Kamera, bevorzugt eine TOF-(time of flight)-Kamera, mit einer Beleuchtungseinheit, einem Bildsensor sowie einer Steuer- und Auswerteeinheit (14) aufweist,
wobei die Steuer- und Auswerteeinheit (14) dazu angepasst ist, das Verfahren nach zumindest einem der vorstehenden Ansprüche durchzuführen, wobei das Verfahren bevorzugt als one-pass-Algorithmus implementiert ist, insbesondere in einem field-programmable-gate array.

13. Autonomes Fahrzeug (10, 10') mit einem optischen Sensor (12) nach Anspruch 12,
wobei das Fahrzeug (10, 10') eine Antriebssteuerung (16) aufweist, die dazu angepasst ist, das Fahrzeug (10, 10') unter Berücksichtigung von geschätzten Bewegungsvektoren (72, 72') zu steuern, insbesondere um Kollisionen zu vermeiden.

## Claims

1. A method of controlling an autonomous vehicle (10, 10') which has an optical sensor (12) for detecting objects (20, 20', 20") in a detection zone (18) of the sensor (12), wherein the optical sensor (12) has at least one 3D camera, preferably a TOF (time of flight) camera, comprising an illumination unit and an image sensor,
wherein the method comprises:
- determining measurement values (22, 22', 22") of the detection zone (18), wherein the measurement values (22, 22', 22") at least comprise distance values, and wherein the measurement values (22, 22', 22") are determined separately for individual picture elements of the image sensor and, in addition to the distance values, comprise intensity values of the detection zone (18) which are determined using the optical sensor (12);
- determining object detection data at least comprising measurement values (22, 22', 22") of the detection zone (18) which are determined when objects (20, 20', 20", 24, 24') are located in the detection zone (18) and the detection zone (18) is preferably exposed to radiation transmitted by the illumination unit;
- determining reference detection data at least comprising measurement values (22, 22', 22") of the detection zone (18) which are determined when no object (20, 20', 20", 24, 24') is located in the detection zone (18) and/or the detection zone (18) is not exposed to radiation transmitted by the illumination unit;
- determining model objects (26, 26') on the basis of the measurement values (22, 22', 22") to detect objects (20, 20', 20", 24, 24') in the detection zone (18), wherein a respective object (20, 20', 20", 24, 24') is represented by a respective model object (26, 26'), and wherein the determination of model objects (26, 26') takes place on the basis of the object detection data and the reference detection data;
- estimating a movement vector (72, 72') on the basis of the respective model object (26, 26'), wherein the movement vector (72, 72') represents a movement of the respective object (20, 20', 20", 24, 24'); and
- controlling the autonomous vehicle (10, 10') on the basis of the movement vector (72, 72').

2. A method in accordance with claim 1,
wherein the movement vector (72, 72') comprises a piece of information on a movement speed of the respective object (20) and/or on a direction of movement of the respective object (20) and/or on a distance, in particular a change of distance, between the respective object (20) and the optical sensor (12).

3. A method in accordance with claim 1 or claim 2,
wherein the movement vector (72, 72') is estimated using a tracking algorithm, preferably a Kalman filter.

4. A method in accordance with claim 3,
wherein the tracking algorithm is adapted to calculate the movement vector (72, 72') on the basis of one or more parameters of the respective model object (26, 26'), with the movement vector (72, 72') representing a movement of the respective object (20) preferably solely with respect to a defined position of the respective model object (26, 26').

5. A method in accordance with at least one of the preceding claims,
wherein the measurement values (22, 22', 22") are determined as a sequence of a plurality of individual frames of the detection zone (18), with the determination of model objects (26, 26') in each case being performed on the basis of an individual frame of the sequence of a plurality of individual frames to obtain a sequence of a plurality of model objects (26, 26').

6. A method in accordance with at least one of the preceding claims,
wherein the movement vector (72, 72') is estimated on the basis of a sequence of a plurality of model objects (26, 26').

7. A method in accordance with at least one of the preceding claims,
wherein a sequence of a plurality of movement vectors (72, 72') is evaluated to estimate a movement path (70) of the respective object (20), and wherein the autonomous vehicle (10, 10') is controlled in dependence on the movement path (70).

8. A system in accordance with claim 7,
wherein the movement path (70) comprises at least one section which represents an expected future movement path (70) of the respective object (20).

9. A method in accordance with claim 7 or claim 8,
wherein the autonomous vehicle (10, 10') is controlled in dependence on the movement path (70) such that a potential collision is avoided by adapting the vehicle movement, in particular with the adaptation of the vehicle movement comprising a change of direction and/or a change of speed of the autonomous vehicle (10, 10').

10. A method in accordance with any one of the claims 7 to 9,
wherein the autonomous vehicle (10, 10') is controlled in dependence on the movement path (70) to make the autonomous vehicle (10, 10') follow the object (20).

11. A method in accordance with at least one of the preceding claims,
wherein the respective model object (26, 26') is defined by at least one of the following parameters:
- a position of a spatial point associated with a maximum difference value, wherein the maximum difference value is associated with the respective model object (26, 26') and represents a maximum difference between a distance value of the object detection data and a reference distance value of the reference detection data;
- a relative number of difference values associated with the respective model object (26, 26') which each represent a difference between a distance value of the object detection data and a reference distance value of the reference detection data and which are each greater than a predetermined threshold value;
- a position of the respective model object (26, 26');
- at least one size parameter (54, 56, 58) of the respective model object (26, 26');
- a minimum distance value of the picture elements whose difference values are associated with the respective model object (26, 26') and/or a position of a spatial point (62) associated with the minimum distance value, wherein the difference values each represent a difference between a distance value of the object detection data and a reference distance value of the reference detection data;
- a maximum distance value of the picture elements whose difference values are associated with the respective model object (26, 26') and/or a position of a spatial point associated with the maximum distance value, wherein the difference values each represent a difference between a distance value of the object detection data and a reference distance value of the reference detection data.

12. An optical sensor (12) which has at least one 3D camera, preferably a TOF (time of flight) camera, comprising an illumination unit, an image sensor and a control and evaluation unit (14),
wherein the control and evaluation unit (14) is adapted to perform the method in accordance with at least one of the preceding claims, and wherein the method is preferably implemented as a one-pass algorithm, in particular in a field-programmable gate array.

13. An autonomous vehicle (10, 10') comprising an optical sensor (12) in accordance with claim 12,
wherein the vehicle (10, 10') has a drive control (16) which is adapted to control the vehicle (10, 10'), while taking into account estimated movement vectors (72, 72'), in particular to avoid collisions.

## Revendications

1. Procédé pour commander un véhicule autonome (10, 10') comportant un capteur optique (12) pour détecter des objets (20, 20', 20") dans une zone de détection (18) du capteur (12), le capteur optique (12) comprenant au moins une caméra 3D, de préférence une caméra temps de vol TOF (time of flight), ayant une unité d'éclairage et un capteur d'images,
le procédé comprenant
- la détermination de valeurs de mesure (22, 22', 22") de la zone de détection (18), les valeurs de mesure (22, 22', 22") comprenant au moins des valeurs de distance, les valeurs de mesure (22, 22', 22") étant déterminées séparément pour des pixels individuels du capteur d'images et comprenant, en supplément aux valeurs de distance, des valeurs d'intensité de la zone de détection (18), qui sont déterminées en utilisant le capteur optique (12),
- la définition de données de détection d'objets comprenant au moins des valeurs de mesure (22, 22', 22") de la zone de détection (18), qui sont déterminées lorsque des objets (20, 20', 20", 24, 24') se trouvent dans la zone de détection (18) et que la zone de détection (18) est de préférence exposée à un rayonnement émis par l'unité d'éclairage ;
- la définition de données de détection de référence comprenant au moins des valeurs de mesure (22, 22', 22") de la zone de détection (18), qui sont déterminées lorsqu'aucun objet (20, 20', 20", 24, 24') ne se trouve dans la zone de détection (18) et/ou que la zone de détection (18) n'est pas exposée à un rayonnement émis par l'unité d'éclairage ;
- la détermination d'objets modèles (26, 26') sur la base des valeurs de mesure (22, 22', 22"), afin de détecter des objets (20, 20', 20", 24, 24') dans la zone de détection (18), un objet respectif (20, 20', 20", 24, 24') étant représenté par un objet modèle respectif (26, 26'), la détermination d'objets modèles (26, 26') étant effectuée sur la base des données de détection d'objets et des données de détection de référence ;
- l'estimation d'un vecteur de mouvement (72, 72') sur la base de l'objet modèle respectif (26, 26'), le vecteur de mouvement (72, 72') représentant un mouvement de l'objet respectif (20, 20', 20", 24, 24') ; et
- la commande du véhicule autonome (10, 10') sur la base du vecteur de mouvement (72, 72').

2. Procédé selon la revendication 1,
dans lequel le vecteur de mouvement (72, 72') comprend une information sur une vitesse de mouvement de l'objet respectif (20) et/ou sur une direction de mouvement de l'objet respectif (20) et/ou sur une distance, en particulier sur une modification de la distance, entre l'objet respectif (20) et le capteur optique (12).

3. Procédé selon la revendication 1 ou 2,
dans lequel le vecteur de mouvement (72, 72') est estimé en utilisant un algorithme de suivi, de préférence un filtre de Kalman.

4. Procédé selon la revendication 3,
dans lequel l'algorithme de suivi est adapté pour calculer le vecteur de mouvement (72, 72') sur la base d'un ou plusieurs paramètres de l'objet modèle respectif (26, 26'), le vecteur de mouvement (72, 72') représentant un mouvement de l'objet respectif (20) de préférence exclusivement par rapport à une position définie de l'objet modèle respectif (26, 26').

5. Procédé selon l'une au moins des revendications précédentes,
dans lequel les valeurs de mesure (22, 22', 22") sont déterminées comme une succession de plusieurs images individuelles de la zone de détection (18), la détermination d'objets modèles (26, 26') étant effectuée sur la base d'une image individuelle respective de la succession de plusieurs images individuelles, afin d'obtenir une succession de plusieurs objets modèles (26, 26').

6. Procédé selon l'une au moins des revendications précédentes,
dans lequel le vecteur de mouvement (72, 72') est estimé sur la base d'une succession de plusieurs objets modèles (26, 26').

7. Procédé selon l'une au moins des revendications précédentes,
dans lequel une succession de plusieurs vecteurs de mouvement (72, 72') est évaluée pour estimer une trajectoire de mouvement (70) de l'objet respectif (20), et
le véhicule autonome (10, 10') est commandé en fonction de la trajectoire de mouvement (70).

8. Procédé selon la revendication 7,
dans lequel le trajet de mouvement (70) comprend au moins une portion représentant une trajectoire de mouvement future attendue (70) de l'objet respectif (20).

9. Procédé selon la revendication 7 ou 8,
dans lequel le véhicule autonome (10, 10') est commandé en fonction de la trajectoire de mouvement (70) de telle sorte qu'une collision potentielle est évitée en adaptant le mouvement du véhicule, et, en particulier, l'adaptation du mouvement du véhicule comprend une modification de la direction et/ou une modification de la vitesse du véhicule autonome (10, 10').

10. Procédé selon l'une des revendications 7 à 9,
dans lequel le véhicule autonome (10, 10') est commandé en fonction de la trajectoire de mouvement (70), afin de faire suivre le véhicule autonome (10, 10') à l'objet (20).

11. Procédé selon l'une au moins des revendications précédentes,
dans lequel l'objet modèle respectif (26, 26') est défini par l'un au moins des paramètres suivants :
- la position d'un point spatial associé à une valeur de différence maximale, la valeur de différence maximale étant associée à l'objet modèle respectif (26, 26') et représentant une différence maximale entre une valeur de distance des données de détection d'objets et une valeur de distance de référence des données de détection de référence ;
- le nombre relatif de valeurs de différence associées à l'objet modèle respectif (26, 26'), qui représentent chacune une différence entre une valeur de distance des données de détection d'objets et une valeur de distance de référence des données de détection de référence et qui sont supérieures à une valeur seuil prédéfinie ;
- la position de l'objet modèle respectif (26, 26') ;
- au moins un paramètre de grandeur (54, 56, 58) de l'objet modèle respectif (26, 26') ;
- la valeur de distance minimale des pixels dont les valeurs de différence sont associées à l'objet modèle respectif (26, 26'), et/ou la position d'un point spatial (62) associé à la valeur de distance minimale, les valeurs de différence représentant chacune une différence entre une valeur de distance des données de détection d'objets et une valeur de distance de référence des données de détection de référence ;
- la valeur de distance maximale des pixels dont les valeurs de différence sont associées à l'objet modèle respectif (26, 26'), et/ou la position d'un point spatial (62) associé à la valeur de distance maximale, les valeurs de différence représentant chacune une différence entre une valeur de distance des données de détection d'objets et une valeur de distance de référence des données de détection de référence.

12. Capteur optique (12) comprenant au moins une caméra 3D, de préférence une caméra temps de vol TOF (time of flight), ayant une unité d'éclairage, un capteur d'image et une unité de commande et d'évaluation (14), l'unité de commande et d'évaluation (14) étant adaptée pour mettre en oeuvre le procédé selon l'une au moins des revendications précédentes, le procédé étant de préférence mis en œuvre sous la forme d'un algorithme à passe unique, en particulier dans un réseau de portes programmables par champ.

13. Véhicule autonome (10, 10') comportant un capteur optique (12) selon la revendication 12,
le véhicule (10, 10') comprenant une commande d'entraînement (16) qui est adaptée pour commander le véhicule (10, 10') en tenant compte de vecteurs de mouvement estimés (72, 72'), en particulier afin d'éviter les collisions.
